# EUROPÄISCHE PATENTSCHRIFT

(11) **EP 3 791 725 B1**
(45) Veröffentlichungstag und Bekanntmachung des Hinweises auf die Patenterteilung: **07.06.2023**
(21) Anmeldenummer: 19196453.5
(22) Anmeldetag: 10.09.2019
(51) Int. Cl.: A21C 1/14, B01F 35/42

(54) **KNETMASCHINE MIT EINER ZANGENVERRIEGELUNG ZUM FIXIEREN EINES BOTTICHWAGENS**
KNEADING MACHINE WITH A CLAMPING LOCK FOR FIXING A TUB CARRIAGE
MACHINE À PÉTRIR DOTÉE D'UN VERROUILLAGE DE PINCES À FIXER À UN CHARIOT CUVE

(43) Veröffentlichungstag der Anmeldung: 17.03.2021
(73) Patentinhaber: DIOSNA Dierks & Söhne GmbH, 49086 Osnabrück (DE)
(72) Erfinder: GHANI, Hashem, 49086 Osnabrück (DE)
(74) Vertreter: Lenzing Gerber Stute

(56) Entgegenhaltungen:
- CH-A5- 656 555
- CN-A- 106 943 923
- DE-A1- 2 115 415
- DE-A1- 2 421 089
- DE-B- 1 201 784
- DE-U1- 29 723 882
- DE-U1-202008 014 044

## Beschreibung

Die vorliegende Erfindung betrifft eine Knetmaschine mit einem entnehmbaren Bottichwagen und einer Zangenverriegelungseinrichtung zum Fixieren des Bottichwagens an der Knetmaschine mit den Merkmalen des Oberbegriffs des Anspruchs 1.

Knetmaschinen für Teige, insbesondere Backteige, weisen einen Bottich unterschiedlicher Größe für Teigmassen von 100 bis 3000 kg, insbesondere bis 1000 kg, auf. Der Bottich selbst ist rotatorisch antreibbar. Er kann Teil eines Bottichwagens sein, der ermöglicht, dass der Bottich zwischen einzelnen Verarbeitungsstationen einfach verfahren werden kann. Während des Knetvorgangs muss der Bottichwagen festgehalten werden, damit er nicht die vorgesehene Position verlässt.

Die Druckschrift DE 21 15 415 offenbart eine Knetmaschine entsprechend dem Oberbegriff des Anspruchs 1 und beschreibt eine Mischmaschine mit einem drehbaren Behälter, der zwischen zwei Rollenpaaren gelagert wird, deren gegenseitiger Abstand verstellbar ist und zwar in der Weise, dass die Rollenpaare an je einem Maul einer Zange gelagert sind.

Aus der Offenlegungsschrift DE 12 01 784 B ist eine Maschine zum Kneten, Mischen und Mengen mit einer Bottichwagenhalterung mit zwei in einer horizontalen Ebene zangenartig bewegbaren Haltgliedern bekannt, wobei der Bottichwagen mit einem Maschinenkörper während der Bearbeitung in vorbestimmter Stellung zu diesem fest, jedoch lösbar gehalten ist.

Zur Fixierung des Bottichwagens sind hydraulisch betriebene Zangenverriegelungen bekannt. Nachteile solcher hydraulischen Antriebe sind allgemein, dass in den Leitungen Leckagen auftreten können und dass die Antriebe als anfällig für mögliche Verschmutzung gelten. Die Viskosität des Hydrauliköles ist außerdem stark abhängig von der Außentemperatur und durch die Kompressibilität des Öls treten Druckverluste auf. Alle diese Faktoren führen dazu, dass hydraulische Antriebe wartungsaufwendig sind. Bei der Verarbeitung von Lebensmitteln ist zudem besondere Sorgfalt geboten. Bei Leckage des hydraulischen Antriebs kann Hydrauliköl austreten und in den Nahrungsmittelteig gelangen und diesen verunreinigen. Die in der Zangenverriegelung herkömmlicherweise verwendeten hydraulischen Antriebe werden zum Schutz vor Verschmutzung durch ein die Knetmaschine nahezu vollständig umgebendes Gehäuse abgedeckt. In Zukunft sollen die Knetmaschinen ein offenes Konzept aufweisen, bei dem nur wenige Teile der Maschine tatsächlich durch ein Gehäuse verdeckt sind und die restlichen Komponenten, wie auch die Zangenverriegelung freigelegt sind. Bei der Reinigung der Knetmaschine müssen die freigelegten Komponenten einfach zugänglich sein. Zudem ist es wünschenswert, dass das offene Design der Knetmaschine möglichst wenig Flächen, Kanten und Ecken aufweist, damit die Reinigung der Knetmaschine möglichst einfach und schnell erfolgen kann.

Es ist daher Aufgabe der vorliegenden Erfindung eine Knetmaschine mit einer Zangenverriegelungseinrichtung zum Fixieren des Bottichwagens an der Knetmaschine anzugeben.

Diese Aufgabe wird von einer Knetmaschine mit einem entnehmbaren Bottichwagen und einer Zangenverriegelungseinrichtung zum Fixieren des Bottichwagens an der Knetmaschine mit den Merkmalen des Anspruchs 1 gelöst.

Demnach ist eine Knetmaschine mit einem entnehmbaren Bottichwagen und einer Zangenverriegelungseinrichtung zum Fixieren des Bottichwagens an der Knetmaschine vorgesehen, wobei die Zangenverriegelungseinrichtung eine Zange mit zwei Armen aufweist, die in einer geschlossenen Stellung den Bottichwagen in einer vordefinierten Position fixiert und in einer geöffneten Stellung den Bottichwagen freigibt, und wobei die Zangenverriegelungseinrichtung einen Linearantrieb mit einer Verstellrichtung und ein mittels des Linearantriebs verstellbares Hebelsystem aufweist, wobei die zwei Arme der Zange an dem Hebelsystem drehbar befestigt sind und mittels des Linearantriebs zwischen einer geschlossen und einer geöffneten Stellung der Zangenverriegelungseinrichtung verstellbar sind. Das Hebelsystem ist symmetrisch zur Verstellrichtung ausgebildet.

Über das Hebelsystem kann die für die Zangenverriegelungseinrichtung benötigte Kraft von dem Antrieb auf die Zange übertragen werden. Der Antrieb kann somit deutlich kleiner dimensioniert werden und in einem größeren Abstand zu der Zange angeordnet werden. Der Antrieb ist somit vor Verschmutzung besser geschützt und das Hebelsystem lässt sich einfach reinigen, so dass die Zangenverriegelungseinrichtung bestens für eine Knetmaschine mit offenem Konzept geeignet ist.

Der Linearantrieb kann beispielsweise ein pneumatischer oder hydraulischer Antrieb sein. Bevorzugt ist der Antrieb ein elektrischer Linearantrieb. Elektrische Linearantriebe haben den Vorteil, dass sie nicht wartungsintensiv ist und zudem ein Gehäuse aufweisen, das einfach zu reinigen ist.

Vorzugsweise weist der Bottichwagen einen drehbaren Bottich auf, der zur Aufnahme von Nahrungsmittelteig mit Teigmassen von 100 bis 3000 kg, insbesondere bis 1000 kg ausgebildet ist.

Das Hebelsystem umfasst bevorzugt Drehgelenke, insbesondere Gabelgelenke, die nur eine Bewegung in einer Ebene ermöglichen.

Es ist vorteilhaft, wenn das Hebelsystem eine erste Stange aufweist, die über eine Kupplung mit dem Linearantrieb verbunden ist und mittels des Linearantriebs entlang ihrer Längsrichtung, die mit der Verstellrichtung des Linearantriebs bevorzugt übereinstimmt, verlagerbar ist.

In einer bevorzugten Ausführungsform ist die erste Stange mit einer zweiten Stange und einer dritten Stange des Hebelsystems jeweils über ein Gabelgelenk verbunden, die ein gemeinsames Gegenstück aufweisen, in das jeweils ein mit den Enden der Stangen verbundener Gabelkopf eingreift, wobei die erste Stange an dem Gegenstück drehfest gehalten ist.

Es ist vorteilhaft, wenn jeweils an einem Ende der zweiten und dritten Stange ein weiteres Gelenk zur Anbindung an einem Arm der Zange vorgesehen ist. Es kann aber auch vorgesehen sein, dass das Hebelsystem noch weitere Hebelelemente umfasst.

Für eine definierte Bewegung der Arme ist es vorteilhaft, wenn die beiden Arme der Zange jeweils an der Knetmaschine drehbar abgestützt sind, wobei die daraus resultierenden Drehachsen symmetrisch zur Verstellrichtung orientiert sind, so dass die von dem Linearantrieb ausgehende Kraft gleichmäßig über beide Arme der Zange verteilt ist. Der Abstand zwischen den Drehachsen beträgt bevorzugt zwischen 500 mm und 700 mm, insbesondere zwischen 550 mm und 620 mm, besonders bevorzugt 590 mm. Die Anordnung der beiden Zangenarme ist vorzugsweise symmetrisch zur Längsachse der ersten Stange; Die zweite und dritte Stange sind gleichlang, bevorzugt zwischen 200 mm und 400 mm, insbesondere zwischen 240 mm und 310 mm, besonders bevorzugt 270 mm.

Für den Fall, dass die erste Stange des Hebelsystems sich in einer eingefahrenen Position befindet, beträgt der Winkel α zwischen der zweiten und der dritten Stange vorzugsweise zwischen 72° und 90°. In der ausgefahrenen Position der ersten Stange, vergrößert sich der Winkel α bevorzugt auf etwa 150°.

Vorzugsweise weist der Linearantrieb einen Kugelgewindetrieb auf, der insbesondere Schutz gegen das Eindringen von Staub, bei Hochdruckreinigung mit geringem Abstand und hoher Temperatur des dabei verwendeten Wassers (Heißwasser) aufweist.

Um eine Beschädigung des Linearantriebs, insbesondere eines elektrischen Linearantriebs, zu verhindern, weist die Kupplung bevorzugt ein Federelement auf.

Im Falle eines elektrischen Linearantriebs ist der Elektromotor bevorzugt so ausgelegt, dass er eine dynamische Tragzahl zwischen 6 kN und 7 kN, besonders bevorzugt 6,8 kN aufbringt. Er weist bevorzugt einen Hub von 100 mm bis 150 mm auf. Durch die Hebelwirkung des Hebelsystems kann ein solcher Elektromotor die benötigte Haltekraft von bevorzugt etwa 24 kN aufbringen.

Eine bevorzugte Ausführungsform der Erfindung wird nachfolgend anhand der Zeichnungen näher erläutert. Gleichartige oder gleichwirkende Bauteile werden in den Figuren mit denselben Bezugszeichen bezeichnet. Es zeigen:
- Figur 1:: eine räumliche Darstellung eines Bottichwagens einer Knetmaschine mit Zangenverriegelungseinrichtung,
- Figur 2:: eine räumliche Ansicht von unten auf den Bottichwagen der Figur 1,
- Figur 3:: eine Detailansicht der Zangenverriegelungseinrichtung im geschlossenen Zustand, sowie
- Figur 4:: eine Detailansicht der Zangenverriegelungseinrichtung im geöffneten Zustand.

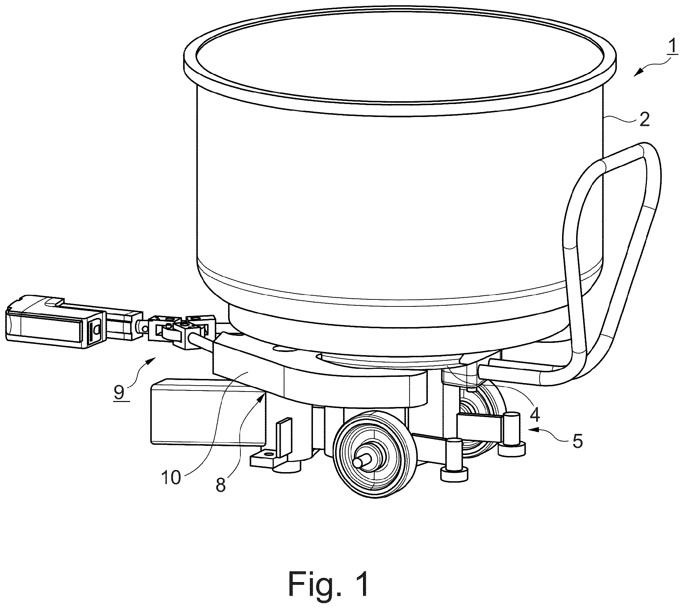

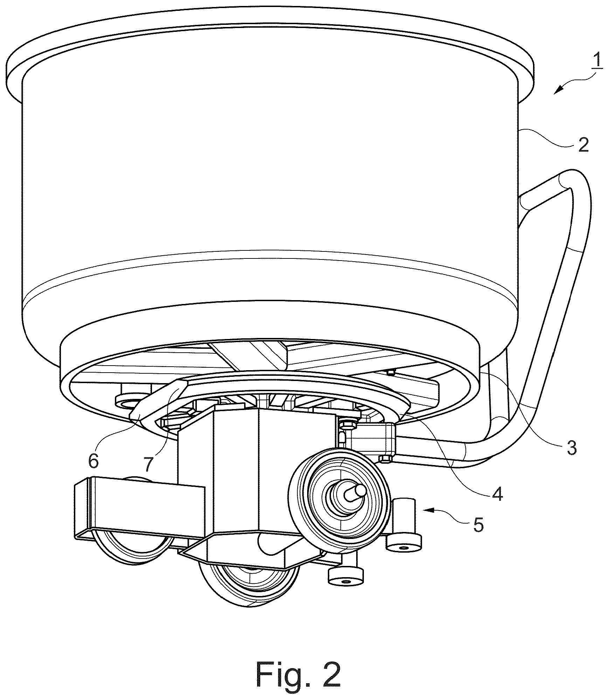

Die Figuren 1 und 2 zeigen einen Bottichwagen 1 mit einem Bottich 2, der mit einer Welle verbunden ist. Auf der Welle sitzt unterhalb des Bottichs 2 eine Bottichscheibe 3, die mit der Welle drehfest verbunden ist und die mit einem Reibrad einer Knetmaschine zum Drehen des Bottichs in Wirkverbindung bringbar ist. Unterhalb der Bottichscheibe 3 ist die Welle von einer Nabenscheibe 4 konzentrisch umgeben, die mit einem Untergestell 5 des Wagens 1 verbunden ist und somit ortsfest gehalten ist. Bei Rotation des Bottichs 2 dreht sich die Nabenscheibe 4 nicht mit. Die Nabenscheibe 4 weist einen unrunden Bereich 6 auf, der eine plane Wirkfläche 7 ausbildet. Passend zu dieser Wirkfläche 7 weist eine Zange 8 einer Zangenverriegelungseinrichtung 9 eine Gegenwirkfläche auf. Beim Schließvorgang der Zangenverriegelungseinrichtung 9 werden die beiden Wirkflächen in Anlage gebracht. Die Wirkflächen sind derart ausgestaltet, dass der Bottichwagen 1 beim Schließen der Zangenverriegelungseinrichtung 9 vom Boden abgehoben wird. Da die Zange 8 zwei Arme 10 aufweist, ist weiterhin ein zweiter nicht dargestellter unrunder Bereich an der Nabenscheibe 4 ausgebildet, der ebenfalls eine Wirkfläche darstellt, die mit einer weiteren Gegenwirkfläche der Zange 8 in Anlage bringbar ist.

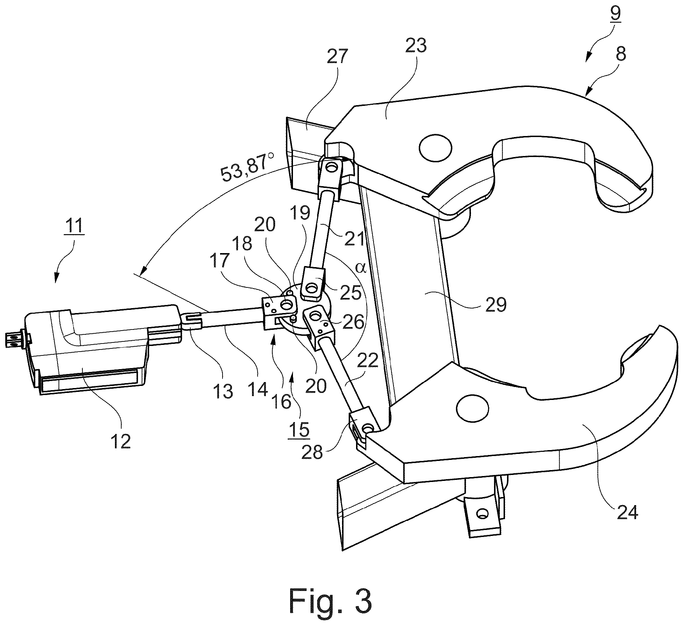

Die Figuren 3 bis 4 zeigen im Detail die Zangenverriegelungseinrichtung 9. Wie in Figur 3 dargestellt ist, umgreift im geschlossenen Zustand der Zangenverriegelungseinrichtung 9 die Zange 8 die nicht dargestellte Nabenscheibe umfangsseitig und stellt somit sicher, dass der Bottichwagen an der Knetmaschine gehalten ist und sich nicht bewegen kann.

Die Zangenverriegelungseinrichtung 9 weist einen elektrischen Linearantrieb 11 mit Elektromotor 12 auf, der die Zangenverriegelungseinrichtung 9 bzw. die Zange 8 von einer geöffneten Stellung in eine geschlossene Stellung verfährt und vice versa. Der Elektromotor 12 ist ein Linearmotor, der mittels einer Kopplung 13 mit einer ersten Stange 14 eines Hebelsystems 15 verbunden ist. Die erste Stange 14 ist mittels des Elektromotors 12 linear in Richtung der Längsachse der Stange 14 in beide Richtungen verfahrbar. Die erste Stange 14 weist an ihrem elektromotorfernen Ende ein Gabelgelenk 16 auf. Am elektromotorfernen Ende der ersten Stange ist ein Gabelkopf 17 des Gabelgelenks 16 mit Querbohrung 18 fest angebracht, der wiederrum mit einem Gegenstück 19 drehfest verbunden ist. Das Gegenstück 19 weist eine korrespondierende Bohrung auf. Ein Bolzen ist durch die Querbohrung 18 des Gabelkopfs 17 und durch die deckungsgleiche Bohrung des Gegenstücks 19 gesteckt. Eine Drehbewegung des Gabelkopfs 17 wird durch zwei auf der Stirnseite des Gegenstücks 19 befindliche Vorsprünge 20 verhindert, indem die Vorsprünge 20 in Anlage mit den Außenseiten des Gabelkopfs 17 liegen. Das Gegenstück 19 ist im Wesentlichen kreiszylindrisch ausgebildet. Die Längsachse des Gegenstücks 19 steht senkrecht auf der Längsachse der ersten Stange 14. Mit dem Gegenstück 19 sind zwei weitere Stangen 21,22 verbunden; die zweite und dritte Stange 21,22, die jeweils einen Arm 23,24 der Zange 8 tragen. Die zweite Stange und dritte Stange 21,22 sind ebenfalls über einen am zangenfernen Ende angeordneten Gabelkopf 25,26 mit dem Gegenstück 19 des Gabelgelenks 16 verbunden. Die zweite Stange 21 und dritte Stange 22 sind um die jeweils ausgebildete Drehachse an dem Gegenstück 19 verschwenkbar gehalten. Die drei Gabelköpfe 17,25,26 sind um jeweils 120° in Umfangsrichtung versetzt an dem Gegenstück 19 des Gabelgelenks 16 gehalten. Das Gabelgelenk 16 ist somit ein Dreifach-Gabelgelenk. An dem zangennahen Ende weisen die zweite und dritte Stange 21,22 jeweils einen weiteren Gabelkopf 27,28 auf, der mit dem jeweiligen Stangenende fest verbunden ist und der jeweils ein am Ende des entsprechenden Zangenarms 23,24 ausgebildetes Gabelkopfgegenstück zur Ausbildung eines Gabelgelenks aufnimmt.

Die Gabelgelenke der Zangenverriegelungseinrichtung 9 sind somit so angebracht, dass sich die Zangenarme 23,24 und die Stangen 14,21,22 des Hebelsystems 15 in einer gemeinsamen Ebene mit der Verstellrichtung des elektrischen Linearantriebs bewegen, auf der insbesondere senkrecht das Knetwerkzeug der Knetmaschine im Betriebszustand bzw. geschlossenen Zustand der Zangenverriegelung steht.

Zum Führen der Bewegung der beiden Zangenarme 23,24 sind diese an einer Haltevorrichtung 29, die bevorzugt Teil eines Gestells der Knetmaschine ist, drehbar gehalten. Die dadurch ausgebildeten beabstandeten Drehachsen sind parallel zu den Drehachsen der Gabelgelenke orientiert. Der Abstand zwischen den Drehachsen beträgt bevorzugt zwischen 500 mm und 700 mm, insbesondere zwischen 550 mm und 620 mm, besonders bevorzugt 590 mm. Die Anordnung der beiden Zangenarme 23,24 ist symmetrisch zur Längsachse der ersten Stange 14; Die zweite und dritte Stange 21,22 sind gleichlang, bevorzugt zwischen 200 mm und 400 mm, insbesondere zwischen 240 mm und 310 mm, besonders bevorzugt 270 mm. Die Zangenarme 23,24 sind gespiegelt ausgebildet und die Längsachs der ersten Stange 14 liegt mittig zwischen den beiden Drehachsen der Zangenarme 23,24. Die beim Schließen der Zange 8 aufgebrachte Kraft kann somit über das Hebelsystem 15 gleichmäßig auf die Nabenscheibe verteilt werden.

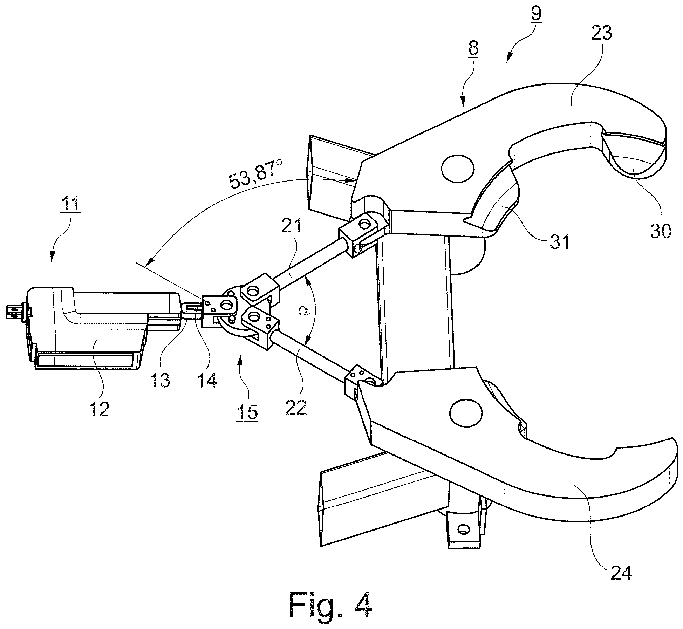

Figur 4 zeigt die geöffnete Stellung der Zangenverriegelung 9, in der der Bottichwagen aus der Zange 8 entnehmbar ist. Die erste Stange 14 des Hebelsystems 15 befindet sich in einer eingefahrenen Position. Der Winkel α zwischen der zweiten und der dritten Stange 21,22 beträgt in der eingefahrenen Position zwischen 72° und 90°. Wird die erste Stange 14 nun ausgefahren, vergrößert sich der Winkel α auf etwa 150°, und die Zangenarme 23,24 werden um die jeweilige Drehachse verschwenkt und aufeinander zubewegt, so dass sich die Zange 8 schließt.

Die Zangenarme 23,24 weisen Vorsprünge 30,31 auf, die in passende Ausnehmungen der Nabenscheibe des Bottichwagens eingreifen und somit eine Verriegelung bewirken.

Der Elektromotor 12 ist so ausgelegt, dass er bevorzugt eine dynamische Tragzahl zwischen 6 kN und 7 kN, besonders bevorzugt 6,8 kN aufbringt. Er weist einen Hub von 100 mm bis 150 mm auf.

Die Kopplung 13 zwischen Linearantrieb 11 und erster Stange 14 ist elastisch ausgebildet, damit die beim Mischen und Kneten auftretende Prozesskräfte nicht auf den Elektromotor 12 übertragen werden und diesen beschädigen. Es ist denkbar eine Sicherheitskupplung einzusetzen, die in Abhängigkeit der Richtung des Übertragenden Drehmomentes das Drehmoment überträgt oder auskuppelt.

Durch die Hebelwirkung des Hebelsystems reicht ein kleiner Elektromotor aus, um die benötigte Haltekraft von etwa 24 kN aufzubringen. Solche Elektromotoren sind mittlerweile kostengünstig zu erwerben und stellen somit eine gute Alternative zu einem hydraulischen Antrieb dar. Die Verwendung eines Elektromotors hat weiterhin den Vorteil, dass dieser ein einfach zu reinigendes Gehäuse aufweist. Auch das Hebelsystem des Hebelantriebs ist einfach zu reinigen.

In einer weiteren Ausführungsform ist vorgesehen, dass das Hebelsystem in der geschlossenen Stellung der Zangenverriegelung vorgespannt ist. Die Vorspannkraft muss beim Übergang von der geschlossenen Stellung in die offene Stellung überwunden werden. Die Vorspannung stellt somit eine Absicherung gegen unbefugtes manuelles Öffnen der Zangenverriegelung dar. Zudem muss der Elektromotor nur in eine Richtung Kraft aufbringen, was ihn kostengünstiger macht.

## Patentansprüche

1. Knetmaschine mit einem entnehmbaren Bottichwagen (1) und einer Zangenverriegelungseinrichtung (9) zum Fixieren des Bottichwagens (1) an der Knetmaschine, wobei die Zangenverriegelungseinrichtung (9) eine Zange (8) mit zwei Armen (23,24) aufweist, die in einer geschlossenen Stellung den Bottichwagen (1) in einer vordefinierten Position fixiert und in einer geöffneten Stellung den Bottichwagen (1) zur Entnahme freigibt,
wobei die Zangenverriegelungseinrichtung (9) einen Linearantrieb (11) mit einer Verstellrichtung und ein mittels des Linearantriebs (11) verstellbares Hebelsystem (15) aufweist, wobei die zwei Arme (23,24) der Zange (8) an dem Hebelsystem (15) drehbar befestigt sind und mittels des Linearantriebs (11) zwischen einer geschlossen und einer geöffneten Stellung der Zangenverriegelungseinrichtung (9) verstellbar sind, **dadurch gekennzeichnet, dass** das Hebelsystem (15) symmetrisch zur Verstellrichtung ist.

2. Knetmaschine nach Anspruch 1, **dadurch gekennzeichnet, dass** der Bottichwagen (1) einen drehbaren Bottich (2) aufweist, der zur Aufnahme von Nahrungsmittelteig mit Teigmassen von 100 bis 3000 kg ausgebildet ist.

3. Knetmaschine nach Anspruch 1 oder 2, **dadurch gekennzeichnet, dass** das Hebelsystem (15) Drehgelenke (16) umfasst, die nur eine Bewegung in einer Ebene ermöglichen.

4. Knetmaschine nach Anspruch 3, **dadurch gekennzeichnet, dass** die Drehgelenke (16) Gabelgelenke sind.

5. Knetmaschine nach Anspruch 4, **dadurch gekennzeichnet, dass** das Hebelsystem (15) eine erste Stange (14) aufweist, die über eine Kupplung (13) mit dem Linearantrieb (11) verbunden ist und mittels des Linearantriebs (11) entlang ihrer Längsrichtung verlagerbar ist.

6. Knetmaschine nach Anspruch 5, **dadurch gekennzeichnet, dass** die erste Stange (14) mit einer zweiten Stange (21) und einer dritten Stange (22) des Hebelsystems (15) jeweils über ein Gabelgelenk (16) verbunden ist, die ein gemeinsames Gegenstück (19) aufweisen, in das jeweils ein mit den Enden der Stangen (14,21,22) verbundener Gabelkopf (17,27,28) eingreift, wobei die erste Stange (14) an dem Gegenstück (19) drehfest gehalten ist.

7. Knetmaschine nach einem der vorhergehenden Ansprüche, **dadurch gekennzeichnet, dass** jeweils an einem Ende der zweiten und dritten Stange (21,22) ein weiteres Gelenk zur Anbindung an einen Arm (23,24) der Zange (8) vorgesehen ist.

8. Knetmaschine nach einem der vorhergehenden Ansprüche, **dadurch gekennzeichnet, dass** die beiden Arme (23,24) der Zange (8) jeweils an der Knetmaschine drehbar abgestützt ist, wobei die daraus resultierenden Drehachsen symmetrisch zur Verstellrichtung des Linearantriebs (11) orientiert sind, so dass die von dem Linearantrieb (11) ausgehende Kraft gleichmäßig über beide Arme (23,24) der Zange (8) verteilt ist.

9. Knetmaschine nach einem der vorhergehenden Ansprüche, **dadurch gekennzeichnet, dass** der Linearantrieb (11) ein elektrischer Linearantrieb ist.

10. Knetmaschine nach einem der vorhergehenden Ansprüche, **dadurch gekennzeichnet, dass** der Linearantrieb (11) einen Kugelgewindetrieb aufweist.

11. Knetmaschine nach einem der vorhergehenden Ansprüche, **dadurch gekennzeichnet, dass** die Kupplung (13) ein Federelement aufweist.

## Claims

1. Kneading machine with a removable bowl carriage (1) and a tongs locking device (9) for fixing the bowl carriage (1) to the kneading machine, wherein the tongs locking device (9) has a tongs (8) with two arms (23, 24), which in a closed position fixes the bowl carriage (1) in a predefined position and in an open position releases the bowl carriage (1) for removal, wherein the tongs locking device (9) has a linear drive (11) with an adjustment direction and a lever system (15) adjustable by means of the linear drive (11), wherein the two arms (23, 24) of the tongs (8) are rotatably fastened to the lever system (15) and are adjustable by means of the linear drive (11) between a closed and an open position of the tongs locking device (9), **characterized in that** the lever system (15) is symmetrical to the adjustment direction.

2. Kneading machine according to claim 1, **characterized in that** the bowl carriage (1) comprises a rotatable bowl (2) designed to receive food dough with dough masses of 100 to 3000 kg.

3. Kneading machine according to claim 1 or 2, **characterized in that** the lever system (15) comprises swivel joints (16) allowing movement in one plane only.

4. Kneading machine according to claim 3, **characterized in that** the swivel joints (16) are fork joints.

5. Kneading machine according to claim 4, **characterized in that** the lever system (15) comprises a first rod (14) which is connected to the linear drive (11) via a coupling (13) and is displaceable along its longitudinal direction by means of the linear drive (11).

6. Kneading machine according to claim 5, **characterized in that** the first rod (14) is connected to a second rod (21) and a third rod (22) of the lever system (15) in each case via a fork joint (16), which have a common counterpart (19) in which in each case a fork head (17, 27, 28) connected to the ends of the rods (14, 21, 22) engages, the first rod (14) being held in a rotationally fixed manner on the counterpart (19).

7. Kneading machine according to one of the preceding claims, **characterized in that** a further joint for connection to an arm (23, 24) of the tongs (8) is provided at one end of each of the second and third rods (21, 22).

8. Kneading machine according to one of the preceding claims, **characterized in that** the two arms (23, 24) of the tongs (8) are each rotatably supported on the kneading machine, the resulting axes of rotation being oriented symmetrically with respect to the direction of adjustment of the linear drive (11), so that the force emanating from the linear drive (11) is distributed uniformly over both arms (23, 24) of the tongs (8).

9. Kneading machine according to one of the preceding claims, **characterized in that** the linear drive (11) is an electric linear drive.

10. Kneading machine according to one of the preceding claims, **characterized in that** the linear drive (11) has a ball screw drive.

11. Kneading machine according to one of the preceding claims, **characterized in that** the clutch (13) comprises a spring element.

## Revendications

1. Pétrisseuse comprenant un chariot amovible (1) porte-cuve et un dispositif de verrouillage (9) à pince, affecté au blocage à demeure dudit chariot (1) porte-cuve sur ladite pétrisseuse, lequel dispositif de verrouillage (9) à pince comporte une pince (8) qui est munie de deux bras (23, 24), bloque le chariot (1) porte-cuve à demeure en un emplacement prédéfini, dans une position fermée, et libère ledit chariot (1) porte-cuve dans une position ouverte, en vue de l'enlèvement, ledit dispositif de verrouillage (9) à pince étant doté d'un entraînement linéaire (11) présentant une direction de réglage, et d'un système de leviers (15) pouvant être réglé au moyen dudit entraînement linéaire (11), sachant que les deux bras (23, 24) de la pince (8) sont fixés audit système de leviers (15) avec faculté de rotation et peuvent être réglés, au moyen dudit entraînement linéaire (11), entre des positions fermée et ouverte dudit dispositif de verrouillage (9) à pince, **caractérisée par le fait que** le système de leviers (15) est symétrique par rapport à la direction de réglage.

2. Pétrisseuse selon la revendication 1, **caractérisée par le fait que** le chariot (1) porte-cuve est pourvu d'une cuve rotative (2) conçue pour recevoir une pâte pour produits alimentaires présentant des masses de pâte de 100 à 3 000 kg.

3. Pétrisseuse selon la revendication 1 ou 2, **caractérisée par le fait que** le système de leviers (15) inclut des articulations tournantes (16) qui autorisent un mouvement dans un plan uniquement.

4. Pétrisseuse selon la revendication 3, **caractérisée par le fait que** les articulations tournantes (16) sont des articulations à chapes.

5. Pétrisseuse selon la revendication 4, **caractérisée par le fait que** le système de leviers (15) comprend une première tige (14) qui est reliée à l'entraînement linéaire (11) par l'intermédiaire d'un accouplement (13) et peut être déplacée, le long de sa direction longitudinale, au moyen dudit entraînement linéaire (11).

6. Pétrisseuse selon la revendication 5, **caractérisée par le fait que** la première tige (14) est reliée à une deuxième tige (21) et à une troisième tige (22) du système de leviers (15), à chaque fois par l'intermédiaire d'une articulation tournante (16) présentant une pièce complémentaire commune (19) dans laquelle pénètre une tête fourchue respective (17, 27, 28) reliée aux extrémités desdites tiges (14, 21, 22), ladite première tige (14) étant retenue sur ladite pièce complémentaire (19) avec verrouillage rotatif.

7. Pétrisseuse selon l'une des revendications précédentes, **caractérisée par le fait qu'**une articulation supplémentaire est respectivement prévue, à une extrémité des deuxième et troisième tiges (21, 22), pour le rattachement à un bras (23, 24) de la pince (8).

8. Pétrisseuse selon l'une des revendications précédentes, **caractérisée par le fait que** les deux bras (23, 24) de la pince (8) sont respectivement en appui rotatif sur ladite pétrisseuse, les axes de rotation, qui en résultent, étant alors orientés symétriquement par rapport à la direction de réglage de l'entraînement linéaire (11), de façon telle que la force émanant dudit entraînement linéaire (11) soit uniformément répartie par l'intermédiaire desdits deux bras (23, 24) de la pince (8).

9. Pétrisseuse selon l'une des revendications précédentes, **caractérisée par le fait que** l'entraînement linéaire (11) est un entraînement linéaire électrique.

10. Pétrisseuse selon l'une des revendications précédentes, **caractérisée par le fait que** l'entraînement linéaire (11) est muni d'un entraînement par vis à billes.

11. Pétrisseuse selon l'une des revendications précédentes, **caractérisée par le fait que** l'accouplement (13) est pourvu d'un élément élastique.
